# DEMANDE DE BREVET EUROPEEN

(11) **EP 4 756 672 A1**
(43) Date de publication de la demande: **10.06.2026**
(21) Numéro de dépôt: 25216697.0
(22) Date de dépôt: 18.11.2025
(51) Int. Cl.: G06K 19/077, G06K 19/02

(54) **CARTE MÉTALLIQUE DE COMMUNICATION EN CHAMP PROCHE**

(30) Priorité: 05.12.2024 FR 2413469
(71) Demandeur: IDEMIA France, 92400 Courbevoie (FR)
(72) Inventeur: DUVAL, Agnès, 92400 Courbevoie (FR); GROULT, Tiphaine, 92400 Courbevoie (FR); BARRO, Oumar, 92400 Courbevoie (FR)
(74) Mandataire: Idemia

(57) **Abrégé**

L'invention concerne une carte à puce sans contact en champ proche, la carte comprenant un corps de carte (10) comportant au moins une couche métallique (110), une première couche d'antenne et une deuxième couche d'antenne ; une puce (11) disposée face à une ouverture (112) de la couche métallique, avec une première antenne (121) formée sur une surface de la première couche d'antenne (120) et connectée à la puce (11), et un composant électronique passif (12), avec une deuxième antenne (131) formée sur une surface de la deuxième couche d'antenne (130) et connectée électroniquement au composant (12).

## Description

### Domaine technique de l'invention

L'invention concerne une carte à communication en champ proche, aussi notée « NFC » pour "Near Field Communication". La communication en champ proche est une technologie de communication sans fil qui permet un échange de données entre deux appareils séparés d'une courte distance, généralement quelques centimètres. La NFC est couramment utilisée dans divers dispositifs tels que les smartphones, les cartes de crédit, et d'autres appareils compatibles pour réaliser des paiements sans contact, partager des informations, ou encore établir des connexions instantanées avec d'autres objets NFC.

La présente invention concerne ici une carte, telle qu'une carte de débit, une carte de crédit, une carte d'identification, une carte de fidélité, une carte de membre, une carte de soins de santé, une carte de sécurité, etc.

L'invention concerne plus particulièrement une carte métallique, c'est-à-dire à une carte comportant un corps incluant un substrat métallique.

### Etat de la technique

Le marché des cartes dites « intelligentes » impose de plus en plus de contraintes esthétiques, notamment pour ce qui concerne les cartes intelligentes « NFC RFID », c'est-à-dire les cartes NFC à puce RFID (« Radio Frequency Identification », c'est-à-dire à identification par radiofréquence), sans contact, fonctionnant pour la plupart des cas dans une plage de fréquences de 13,56 MHz environ, par exemple pour des applications bancaires, de transport, automobiles ou d'identification.

Une carte métallique désigne ici une carte dont un substrat, lequel constitue une partie substantielle du corps de carte, comporte, selon son épaisseur, au moins une feuille métallique, voire est constitué essentiellement d'une feuille ou plaque métallique, laquelle peut être usinée, gravée, peinte et/ou vernis selon les besoins.

La carte considérée ici est une carte dite « intelligente » (aussi désignée « smart card »), qui intègre donc une structure en métal dans sa conception.

Une carte métallique présente ainsi des défis en matière de communication en champ proche, car la présence de métal peut altérer la performance d'une antenne contenue généralement dans le corps de la carte pour établir la communication sans contact, en champ proche.

Par conséquent, des solutions techniques spéciales, comme des antennes spécifiques et des processus de fabrication adaptés, sont développés pour procurer un fonctionnement acceptable de la carte malgré la présence de métal pour constituer le corps de la carte.

L'une des principales demandes actuelles concerne les cartes intelligentes métalliques comme décrites ci-dessus, pouvant en outre comporter au moins un composant électronique passif, par exemple tel qu'une LED ("Light Emitting Diode", c'est-à-dire une diode électroluminescente), une OLED ("Organic Light Emitting Diode", c'est-à-dire une diode électroluminescente organique), notamment une LED ou une OLED connectée à un pont de diodes, un pont de diode, un composant piézoélectrique au moins en partie constitué en céramique, un écran, un capteur, ou autre.

Ce type de carte est conçu pour répondre à des exigences esthétiques et fonctionnelles particulières dans le cadre des applications NFC RFID sans contact. Un objectif de la présente invention est alors de proposer une carte métallique pouvant fonctionner sans contact, et pouvant en outre comporter au moins un composant électronique passif, par exemple tel que mentionné précédemment.

### Exposé de l'invention

A cet effet, est proposé, selon un premier aspect de l'invention, une carte à puce métallique configurée pour fonctionner sans contact en champ proche, la carte comprenant :
- un corps de carte formé par un empilement de couches, l'empilement de couches comportant au moins :
   - une couche métallique, la couche métallique étant délimitée par un bord périphérique définissant un pourtour du corps de carte, et la couche métallique comportant une ouverture formée à distance du bord périphérique ;
   - une première couche d'antenne disposée d'un premier côté de la couche métallique, distincte de la couche métallique,
   - une deuxième couche d'antenne, distincte de la première couche d'antenne et de la couche métallique,
- une puce, disposée face à l'ouverture de la couche métallique,
- une première antenne formée sur une surface de la première couche d'antenne (120), la première antenne étant connectée électroniquement à la puce (11), la première antenne comportant au moins un premier ensemble de spires comportant au moins une spire dite externe longeant le pourtour du corps de carte (10), et la première antenne comportant au moins un deuxième ensemble de spires comportant au moins une spire dite interne entourant la puce, voire entourant l'ouverture de la couche métallique, le premier ensemble de spires de la première antenne étant distinct du deuxième ensemble de spires de la première antenne, et le premier ensemble de spires de la première antenne étant relié électriquement au deuxième ensemble de spires de la première antenne par au moins un tronçon de fil d'antenne,
- un composant électronique passif,
- une deuxième antenne formée sur une surface de la deuxième couche d'antenne, la deuxième antenne étant connectée électroniquement au composant électronique passif, la deuxième antenne comportant au moins un premier ensemble de spires comportant au moins une spire dite externe longeant le pourtour du corps de carte, le premier ensemble de spires de la deuxième antenne étant disposé en face du premier ensemble de spires de la première antenne, et la deuxième antenne comportant au moins un deuxième ensemble de spires comportant au moins une spire dite interne entourant la puce, voire entourant l'ouverture de la couche métallique, le deuxième ensemble de spires de la deuxième antenne étant disposé en face du deuxième ensemble de spires de la première antenne, le premier ensemble de spires de la deuxième antenne étant distinct du deuxième ensemble de spires de la deuxième antenne, et le premier ensemble de spires de la deuxième antenne étant relié électriquement au deuxième ensemble de spires de la deuxième antenne par au moins un tronçon de fil d'antenne.

La carte selon l'invention comporte notamment une couche supplémentaire comportant une antenne connectée électriquement à un composant électronique passif, tel qu'une LED ou une OLED, éventuellement connectée à un pont de diodes, un composant piézoélectrique en céramique, un écran, un capteur ou autres.

L'invention propose ainsi une structure de carte métallique NFC comportant une antenne RFID HF (hautes fréquences), adaptée aux applications RFID HF telles que définies par le protocole de communication ISO 10373/14443/15693 ou tout autre schéma de communication en champ proche RFID HF.

L'invention propose ainsi une disposition d'antenne adaptée aux cartes intelligentes NFC RFID métalliques sans contact, pouvant fonctionner à la plage de fréquences d'environ 13,56 MHz, par exemple pour des applications bancaires (paiement), de transport, automobiles ou d'identification.

La carte selon l'invention est particulièrement adaptée aux cartes métalliques NFC purement sans contact et aux cartes métalliques NFC duale.

Une telle carte métallique permet de se dispenser de matériau ferrite pour constituer la couche métallique.

Une telle carte permet aussi un comportement symétrique des deux côtés de la carte tout en incluant un composant électronique passif.

Chaque antenne comprend deux ensembles de spires.

Un ensemble de spires comporte par exemple au moins deux spires, les au moins deux spires étant distantes l'une de l'autre d'une distance dite « distance inter-spires ». De plus, pour chaque antenne, le premier ensemble de spire est distant du deuxième ensemble de spire d'une distance dite « distance inter-ensemble », qui est plus grand que la « distance inter-spires ».

Par exemple, la spire la plus interne parmi les spires du premier ensemble de spires est distant, de la distance inter-ensemble, de la spire la plus externe parmi les spires du deuxième ensemble de spires.

Les deux ensembles de spires d'une antenne sont ainsi visuellement bien distincts. Une antenne comprenant deux ensembles de spires permet de capter une énergie de courants de Foucault à partir de la couche métallique, améliorant ainsi un comportement symétrique de la carte dans le champ magnétique.

Les courants de Foucault circulant dans des boucles fermées, la boucle la plus extérieure (c'est-à-dire la spire la plus grande), correspondant au plus long chemin des courants de Foucault, est alors la spire la plus dominante en termes d'énergie qu'elle transporte.

Un avantage d'un montage à deux antennes dans une carte selon l'invention est qu'un courant induit dans la première antenne permet d'alimenter la puce, et qu'un courant induit dans la deuxième antenne permet d'alimenter le composant électronique passif. Dans un exemple de réalisation, la carte comporte au moins une couche isolante électriquement.

Par exemple, la couche isolante électriquement est disposée entre la couche métallique et au moins une de la première couche d'antenne et la deuxième couche d'antenne.

Dans un exemple de réalisation, la couche métallique est disposée entre la première couche d'antenne et la deuxième couche d'antenne.

Dans un exemple de réalisation, la deuxième couche d'antenne est disposée entre la première couche d'antenne et la couche métallique.

Dans un exemple de réalisation, le composant électronique passif est en face de la puce.

Dans un exemple de réalisation, le composant électronique passif est décalé latéralement par rapport à l'ouverture.

Dans un exemple de réalisation, la carte comporte un matériau diélectrique non magnétique.

Par exemple, le matériau diélectrique non magnétique remplit l'ouverture.

Dans un exemple de réalisation, la couche métallique comporte au moins une première fente s'étendant entre l'ouverture et un bord périphérique de la couche métallique.

Par exemple, un bord de la première fente relie un pourtour de l'ouverture au bord périphérique de la couche métallique.

Dans un exemple de réalisation, la couche métallique comporte au moins une deuxième fente.

Par exemple, la deuxième fente est borgne.

Par exemple, la deuxième fente s'étend dans la couche métallique depuis l'ouverture de la couche métallique.

Dans un exemple de réalisation, la carte comporte un module encarté dans une cavité du corps de carte.

Par exemple, le module comporte la puce.

Dans un exemple de réalisation, la carte comporte au moins une couche de revêtement supérieure.

Dans un exemple de réalisation, la carte comporte au moins une couche de revêtement inférieure.

Par exemple, les deux couches d'antenne et la couche métallique sont disposées entre la couche de revêtement supérieure et la couche de revêtement inférieure.

Dans un exemple de réalisation, le composant électronique passif comporte une LED, une OLED, une LED ou OLED connectée, à un pont de diodes, un composant piézoélectrique en céramique, un écran, un capteur, des cristaux liquides ou une capacité.

### Brève description des figures

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
la figure 1 représente une vue schématique en coupe d'une carte métallique selon un exemple de réalisation de la présente invention ;
la figure 2 illustre schématiquement une vue de dessus d'une couche métallique assemblée avec une première couche d'antenne d'une carte telle qu'illustrée à la figure 1 ;
la figure 3 illustre schématiquement une vue de dessus d'une deuxième antenne d'une carte telle qu'illustrée à la figure 1 ;
la figure 4 illustre un agencement dans lequel une deuxième couche d'antenne est disposée entre une première couche d'antenne et une couche métallique, et dans lequel la couche métallique comporte une ouverture dite « centrale » ;
la figure 5 illustre un agencement dans lequel une deuxième couche d'antenne est disposée entre une première couche d'antenne et une couche métallique, et dans lequel la couche métallique comporte une ouverture pour un module pour une carte de type carte « duale » ;
la figure 6 illustre un agencement dans lequel une couche métallique est disposée entre une première couche d'antenne et une deuxième couche d'antenne, et dans lequel la couche métallique comporte une ouverture dite « centrale » ;
la figure 7 illustre un agencement dans lequel une couche métallique est disposée entre une première couche d'antenne et une deuxième couche d'antenne, et dans lequel la couche métallique comporte une ouverture pour un module pour une carte de type carte « duale » ; et
la figure 8 illustre une schématisation fonctionnelle de la carte selon un exemple de réalisation de l'invention.

### Description détaillée

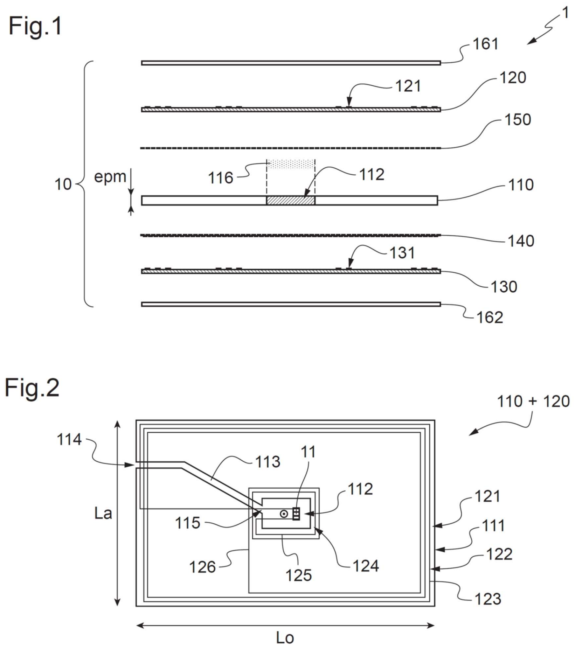

La figure 1 illustre schématiquement une structure de carte métallique « intelligente » NFC 1 selon un exemple de réalisation.

Une carte 1 telle que considérée ici comporte au moins un corps 10, lequel est formé d'un empilement de couches. Le corps 10 a des dimensions (longueur Lo, largeur La, épaisseur ep, l'épaisseur ep étant orthogonale à la longueur Lo et la largeur La schématisées figure 2) qui définissent les dimensions de la carte 1.

S'agissant d'une carte métallique, le corps 10 comporte au moins une couche métallique 110.

La couche métallique 110 peut ici être constituée de tout matériau métallique, lequel peut ne pas être ferritique.

Par exemple, la couche métallique peut comporter du cuivre, de l'aluminium, de l'or, de l'acier inoxydable ou tout autre matériau plaqué par un revêtement métallique du type susmentionnée.

La couche métallique comporte un bord périphérique 111 (illustré figure 2), lequel définit ainsi un pourtour (ou surface latérale) du corps de carte.

La couche métallique 110 a une largeur La et une longueur Lo, prise selon son bord périphérique 111, qui définissent la largeur et la longueur du corps 10 de carte 1, et donc incidemment les dimensions correspondantes de la carte 1.

La couche métallique parcourt ainsi toute une surface de la carte.

La couche métallique comporte une première face et une deuxième face, opposée l'une à l'autre et sensiblement parallèle l'une à l'autre.

La première face et la deuxième face définissent ainsi entre elles une épaisseur epm de la couche métallique (illustrée figure 1).

Comme le montre la figure 1, le corps de carte comporte en outre une première couche d'antenne 120.

La première couche d'antenne 120 est distincte de la couche métallique 110.

La première couche d'antenne 120 est disposée d'un côté de la première face de la couche métallique 110.

Sur le schéma de la figure 1, la première couche d'antenne 120 est disposée au-dessus de la couche métallique 110.

Le corps de carte comporte en outre une deuxième couche d'antenne 130.

La deuxième couche d'antenne 130 est distincte de la première couche d'antenne 120 et de la couche métallique 110,

La deuxième couche d'antenne 130 est ici disposée d'un côté de la deuxième face de la couche métallique 110.

Sur le schéma de la figure 1, la deuxième couche d'antenne 130 est disposée en-dessous de la couche métallique 110.

Toutefois comme décrit par la suite, la première couche d'antenne 120 et la deuxième couche d'antenne 130 peuvent être disposées d'un même côté de la carte métallique 110.

Le corps de carte comporte également ici une couche de revêtement (souvent désignée overlay) supérieure 161 et une couche de revêtement (overlay) inférieure 162.

Les overlays sont des couches généralement disposées en surface libre du corps de carte.

Les overlays sont généralement ajoutés à la carte pour l'impression esthétique et/ou les fonctionnalités de sécurité (identification et/ou authentification d'une carte par rapport à son titulaire), bien connues dans l'industrie des cartes intelligentes.

Ici, les deux couches d'antenne 120, 130 et la couche métallique 110 sont donc disposées entre la couche de revêtement supérieure 161 et la couche de revêtement inférieure 162.

Au moins l'une de la couche de revêtement supérieure 161 et de la couche de revêtement inférieure 162 est par exemple une couche de plastique, ou par exemple les deux couches de revêtement 161, 162 sont en plastique.

Selon une option illustrée figure 1, le corps de carte comporte en outre au moins une couche isolante électriquement 140, 150.

Une telle couche isolante électriquement 140, 150 est disposée entre la couche métallique 110 et la première couche d'antenne 120 et/ou la deuxième couche d'antenne 130.

Une telle couche isolante électriquement 140, 150 forme une couche de protection et est configurée pour améliorer une adhérence entre la couche métallique 110 et une des couches d'antenne 120, 130.

La couche isolante électriquement 140, 150 comporte par exemple une couche de résine ou un adhésif, par exemple une couche de résine diélectrique.

Une résine diélectrique permet d'attacher la couche métallique à ses couches adjacentes supérieure et inférieure.

Ici, une couche isolante électriquement 150 est disposée entre la couche métallique 110 et la première couche d'antenne 120, et une autre couche isolante électriquement 140 est disposée entre la couche métallique 110 et la deuxième couche d'antenne 130.

La figure 2 illustre schématiquement, en vue de dessus, la couche métallique 110, assemblée avec la première couche d'antenne 120.

Comme le montre cette figure, la couche métallique comporte une ouverture 112. L'ouverture 112 est formée à distance du bord périphérique 111 de la couche métallique 110.

L'ouverture 112 peut avoir tout type de forme ; elle peut avoir une forme régulière telle qu'un rectangle, un cercle, ou toute autre forme géométrique, régulière ou irrégulière. Elle a généralement une forme ronde ou rectangulaire, voire carrée. L'ouverture peut aussi éventuellement comporter des coins arrondis.

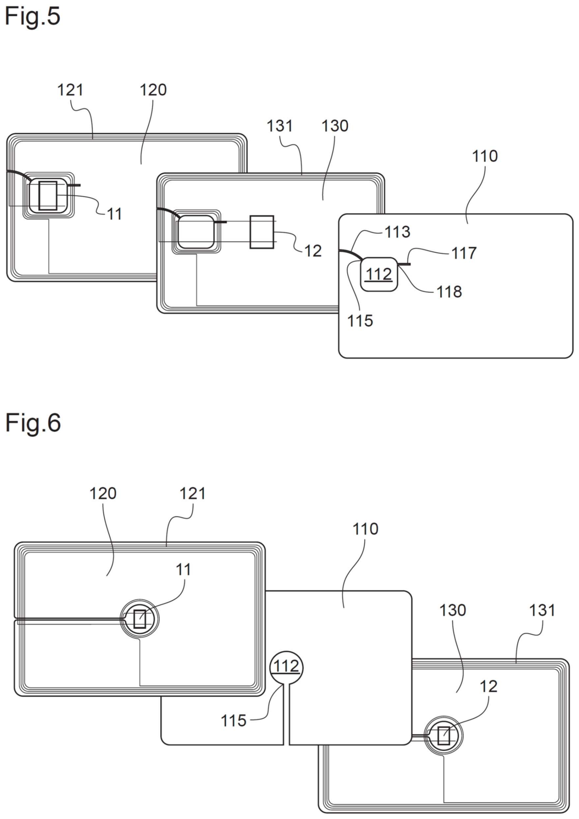

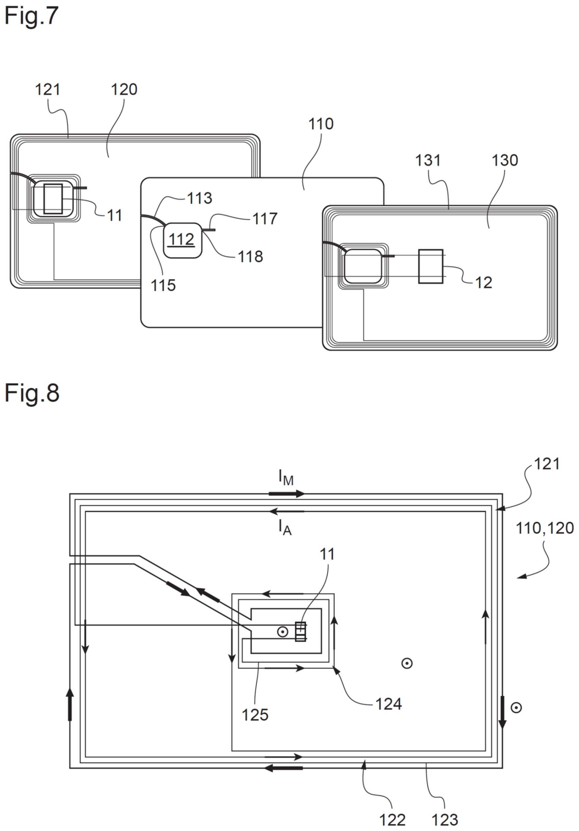

L'ouverture peut être formée dans une partie centrale de la carte (comme illustré sur les figures 2, 4, 6 et 8 par exemple), ou être excentrée (comme illustré sur les figures 5 et 7 par exemple), notamment dans pour une carte dite « duale ».

Dans une configuration où l'ouverture est centrée, un centre de l'ouverture est de préférence situé au centre géométrique de la carte 1, comme par exemple prévu dans les normes EMVCO ; pour les cartes ID1, le centre géométrique est considéré comme la référence centrale d'un plan de test.

L'ouverture peut cependant être décentrée le long de la longueur et/ou de la largeur de la carte. Elle peut coïncider avec la cavité du module dual. Cela est d'un intérêt particulier car les modules peuvent prendre plusieurs formes irrégulières. La taille de la cavité peut être considérablement réduite à une cavité de 1 cm de diamètre (plus petite qu'un module « M3 », un module M3 désignant un format de module de petite taille, par exemple dont les dimensions sont de l'ordre de 11 +/-0,2 mm x 82 +/-0,2 mm, par exemple 10,85 mm*8,17 mm).

Dans un mode de réalisation d'une carte duale, c'est-à-dire pouvant fonctionner avec ou sans contact, la carte comporte alors un module électronique encarté dans une cavité de la carte, et cette cavité peut alors éventuellement coïncider avec l'ouverture de la couche métallique, c'est-à-dire être ménagée en face de l'ouverture 112.

Un tel module, comportant alors la puce 11, étant connu du domaine des cartes duales, il n'est pas décrit plus en détails ici.

Par exemple, pour une carte duale, une cavité est préalablement formée dans la couche métallique, puis elle est assemblée avec les autres couches, puis une cavité est percée dans ces autres couches pour rejoindre la cavité de la couche métallique et venir y encarter le module.

Dans un exemple de réalisation, la carte peut comporter un matériau diélectrique non magnétique 116 qui peut être utilisé pour remplir l'ouverture 112.

Ce matériau peut comporter une résine, par exemple la même résine que celle constituant l'au moins une couche isolante électriquement 140, 150.

Le matériau diélectrique non magnétique 116 peut comporter un matériau rigidifiant mécaniquement, comme par exemple une céramique, de la pierre, du bois, ou encore du caoutchouc, par exemple un caoutchouc dur.

Le matériau diélectrique non magnétique 116 peut aussi être transparent, par exemple en utilisant un verre trempé ou un matériau de remplissage en polycarbonate transparent.

Dans cet exemple de réalisation, la couche métallique 110 comporte en outre une première fente 113.

La première fente 113 connecte ici l'ouverture 112 avec le bord périphérique 111 de la couche métallique.

Ainsi, le bord périphérique 111, des bords de la première fente 113 et un pourtour de l'ouverture 112 forment une surface latérale de la couche métallique 110 qui est continue.

Par exemple, la première fente 113 débouche au bord périphérique 111 à une embouchure 114.

Par exemple, la première fente 113 débouche dans l'ouverture 112 à une embouchure 115.

L'embouchure 114 peut par exemple être décalée par rapport à l'embouchure 115, par rapport à un bord de la couche métallique comportant l'embouche 114.

Dans un exemple de réalisation, la première fente 113 peut comporter un tronçon droit et/ou un tronçon courbe.

Dans l'exemple de réalisation de la figure 2, la première fente 113 comporte un premier tronçon comportant l'embouche 114 qui s'étend orthogonalement à une partie du bord périphérique 111 qui comporte l'embouchure 114.

Dans l'exemple de réalisation de la figure 2, la première fente 113 comporte un deuxième tronçon comportant l'embouche 115 qui s'étend obliquement par rapport au premier tronçon.

Ici, le premier tronçon et le deuxième tronçon sont droits.

Cependant, au moins l'un des tronçons pourrait être courbe.

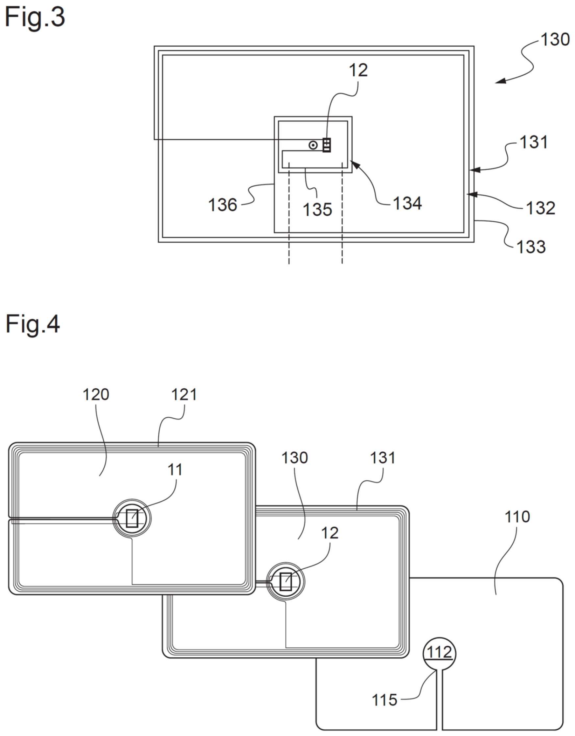

Par exemple, dans les exemples de réalisation des figures 4 et 6 décrits ultérieurement, la première fente 113 ne comporte qu'un tronçon droit, s'étendant orthogonalement à un bord de la couche métallique, et l'embouchure 114 est en face de l'embouchure 115.

Selon un autre exemple, comme illustré aux figures 5 et 7 décrites ultérieurement, la première fente 113 ne comporte qu'un tronçon courbe, et l'embouchure 114 est décalée par rapport à l'embouchure 115.

Selon une autre option, ici illustrée aux figures 5 et 7, la couche métallique 110 comporte une deuxième fente 117.

La deuxième fente 117 est par exemple borgne.

La deuxième fente 117 s'étend par exemple dans la couche métallique depuis l'ouverture 112, depuis une embouchure 118, distincte de l'embouche 115 de la première fente 113.

La deuxième fente 117 peut comporter un tronçon droit et/ou un tronçon courbe.

Dans les exemples représentés, la deuxième fente 117 ne comporte qu'un tronçon droit.

Comme l'illustre par ailleurs la figure 2, le corps 10 comporte une première antenne 121.

La première antenne 121 est ici une antenne RFID, par exemple haute fréquence (HF).

La première antenne 121 est agencée dans une couche physique distincte de la couche métallique, ici sur une surface de la première couche d'antenne 120.

La première antenne 121 est par exemple formée d'un fil métallique.

La première antenne 121 est disposée de manière à comporter au moins deux ensembles de spires :
- Un premier ensemble de spires 122 est arrangé le long du bord périphérique 111 de la couche métallique 110 ; cet ensemble comprend au moins une spire 123, puis il évolue, en spiral, vers un centre de la couche métallique ;
- Un deuxième ensemble 124 de spires est arrangé autour d'un pourtour de l'ouverture 112 formée dans la couche métallique, de manière à encercler l'ouverture 112 avec au moins une spire 125.

Les deux ensembles de spires sont continuellement connectés électriquement, par exemple par un tronçon de fil d'antenne 126.

Une direction d'enroulement du fil métallique formant la première antenne 121, depuis la spire la plus extérieure 123 vers la spire la plus intérieure 125, est telle que le courant I_{A} circule dans la même direction dans les deux spires, comme l'illustre par exemple la figure 8.

La carte 1 comporte en outre un microcontrôleur 11, aussi désigné puce 11, c'est-à-dire un élément électronique sécurisé.

La puce 11 est configurée pour communiquer avec un lecteur externe, au moyen de la première antenne 121.

La première antenne 121 est donc par exemple accordée à la fréquence appropriée par rapport à l'impédance d'entrée de la puce 11 pour répondre aux exigences des normes de communication prévues, par exemple telles que les normes ISO 10373, ISO 14443, ISO 18745, EMVCo, ou encore ISO 15693.

La première antenne 121 est connectée à la puce 11 au moyen de techniques bien connues des cartes à puce et à antenne.

Comme l'illustre la figure 2, une extrémité de l'antenne, par exemple une terminaison de la plus grande spire 123, est connectée électriquement à une première borne d'antenne de la puce 11, et une terminaison de la plus petite spire 125, est connectée électriquement à une seconde borne d'antenne de la puce 11.

La puce 11 peut par exemple être montée sur une surface de la première couche d'antenne 120.

Comme l'illustre par ailleurs la figure 3, le corps 10 comporte une deuxième antenne 131.

La deuxième antenne 131 est ici une antenne RFID, par exemple haute fréquence (HF).

La deuxième antenne 131 est agencée dans une couche physique distincte de la couche métallique, ici sur une surface de la deuxième couche d'antenne 130.

La deuxième antenne 131 est par exemple formée d'un fil métallique.

La deuxième antenne 131 est disposée de manière à comporter au moins deux ensembles de spires :
- Un premier ensemble de spires 132 est arrangé le long du bord périphérique 111 de la couche métallique 110 ; cet ensemble comprend au moins une spire 133, puis il évolue, en spiral, vers un centre de la couche métallique ;
- Un deuxième ensemble 134 de spires est arrangé autour d'un pourtour de l'ouverture 112 formée dans la couche métallique, de manière à encercler l'ouverture 112 avec au moins une spire 135.

Les deux ensembles de spires sont continuellement connectés électriquement, par exemple par un tronçon de fil d'antenne 136.

Une direction d'enroulement du fil métallique formant la deuxième antenne 131, depuis la spire la plus extérieure 133 vers la spire la plus intérieure 125, est telle que le courant circule dans la même direction dans les deux spires.

La carte 1 comporte en outre un composant électronique passif 12.

Le composant électronique passif 12 comporte par exemple une LED ou une OLED, éventuellement connectée à un pont de diodes, un composant piézoélectrique en céramique, un écran, ou un capteur.

La deuxième antenne 131 est connectée au composant électronique passif 12 au moyen de techniques analogues à celles utilisées pour connecter la puce 11 à la première antenne 121.

Comme l'illustre la figure 3, une extrémité de la deuxième antenne 131, par exemple une terminaison de la plus grande spire 133, est connectée électriquement à une première borne du composant électronique passif 12, et une terminaison de la plus petite spire 135, est connectée électriquement à une seconde borne du composant électronique passif 12.

Le composant électronique passif 12 peut par exemple être monté sur une surface de la deuxième couche d'antenne 130.

Par exemple, le composant électronique passif 12 peut être visible depuis un extérieur de la carte 1. Pour ce faire, la couche de revêtement supérieure 161 ou inférieure 162 qui recouvre le composant électronique passif 12 peut comporter un orifice, et/ou au moins une zone transparente.

Les figures 4 à 7 illustrent des exemples d'agencement de la couche métallique 11, la première couche d'antenne 120, et la deuxième couche d'antenne 130.

Dans les figures 4 et 5, la deuxième couche d'antenne 130 est disposée entre la première couche d'antenne 120 et la couche métallique 110.

La couche métallique 110 peut alors être en-dessous des deux couches d'antenne, comme schématisé figure 4, ou au-dessus, comme schématisé figure 5.

Dans l'exemple de la figure 4, la première couche d'antenne 120 est alors considérée au-dessus de la deuxième couche d'antenne 130 et de la couche métallique 110, tandis que dans l'exemple de la figure 5, la première couche d'antenne 120 est alors considérée en dessous de deuxième couche d'antenne 120 et de la couche métallique 110.

Dans les figures 6 et 7, la couche métallique 110 est disposée entre la première couche d'antenne 120 et la deuxième couche d'antenne.

La première couche d'antenne 120 peut alors être au-dessus de la couche métallique, comme schématisé figure 6, ce qui correspond à un empilement tel qu'illustré figure 1, ou en-dessous, comme schématisé figure 7.

Dans l'exemple de la figure 6, la deuxième couche d'antenne 130 est alors considérée en-dessous de la couche métallique 110, tandis que dans l'exemple de la figure 7, la deuxième couche d'antenne 130 est alors considérée au-dessus de la couche métallique 110.

Ainsi, l'antenne RFID HF et l'antenne connectée à un composant électronique passif peuvent être du même côté de la couche métallique, ou de chaque côté de la couche métallique.

Cependant, disposer la première couche d'antenne et la deuxième couche d'antenne de part et d'autre de la couche métallique 110 procure une meilleure symétrie mécanique pour la carte ; les antennes étant alors disposées de chaque côté de la couche métallique.

La carte 1 peut être une carte RFID HF purement sans contact, ou une carte duale. Par exemple, les figures 4 et 6 illustrent des exemples de réalisation de carte purement sans contact.

Dans ces exemples de réalisation des figures 4 et 6, la puce 11 et le composant électronique passif 12 sont disposés en superposition l'un à l'autre, et en face de l'ouverture 112 de la couche métallique 110.

En revanche, les figures 5 et 7 illustrent des exemples de réalisation de carte duale. Dans ces exemples de réalisation, la puce 11 est en face de l'ouverture 112 de la couche métallique 110, tandis que le composant électronique passif 12 est décalé latéralement par rapport à l'ouverture 112 de la couche métallique 110 et se retrouve ainsi en face d'une partie de surface pleine, en métal, de la couche métallique 110.

En fonctionnement, lorsque la carte est placée dans le champ électromagnétique d'un lecteur RFID HF interrogateur (opérant par exemple dans la bande de fréquence RFID d'environ 13,56 MHz), des courants de Foucault se forment sur la couche métallique comme un effet de réaction s'opposant au champ magnétique appliqué. Les courants de Foucault circulent dans des spires, qui forment des boucles fermées, et la spire 123 la plus extérieure (la plus grande), correspondant au plus long chemin des courants de Foucault, est la spire la plus dominante en termes d'énergie transportée. La représentation des courants électriques de la figure 8 suppose un champ magnétique externe normal et sortant du plan comme illustré. La deuxième antenne 131 connectée au composant électronique passif 12 est routée de la même manière que la première antenne RFID HF 121, de sorte que la deuxième antenne 131, en présence de la couche métallique, ait le même comportement que la première antenne RFID HF 121. Dans la présente invention, la première antenne RFID HF 121, grâce aux spires d'enroulement du premier ensemble de spires 122 de l'antenne qui sont face à la périphérie extérieure de la couche métallique 110, des courants électriques d'image se forment dans ces spires. En considérant le schéma de la figure 8, les courants de Foucault sont montrés par les flèches plus épaisses indiquant la boucle de courant I_{M} la plus extérieure sur le bord périphérique extérieur de la couche métallique 110. Les flèches illustrées moins épaisses illustrent le courant d'image I_{A} induit dans la première antenne 121.

Comme illustré, le courant induit s'écoulera de la spire la plus extérieure vers la spire la plus intérieure qui encercle l'ouverture 112.

La deuxième antenne 131 connectée au composant électronique passif 12 fonctionne de la même manière que la première antenne RFID HF 121.

Le routage de la première antenne 121 à travers ces deux séries de spires, comme représenté, avec la présence de la première fente 113 s'ouvrant dans l'ouverture 112, produit un courant induit (I_{A}) circulant dans les spires du deuxième ensemble de spires 124 et un courant de Foucault autour de l'ouverture qui sont dans la même direction, tous deux en phase avec le champ magnétique incident.

Lorsque les deux antennes sont routées dans la même direction, elles sont en phase et lorsque l'orientation est différente, les antennes sont en opposition de phase.

Les deux antennes ont ici le même comportement.

Pour la direction du champ magnétique considérée dans la figure 8, le courant I_{A} circulant dans les spires de la première antenne 121 dans les deux ensembles de spires 122, 124 circule dans une direction antihoraire et a la même direction de rotation grâce à la condition d'avoir la même direction d'enroulement pour les deux ensembles de spires 122, 124. La boucle extérieure dominante de courant de Foucault s'oppose au champ magnétique incident, circulant ainsi dans une direction horaire le long du bord périphérique extérieur 111 de la couche métallique 110, mais continue cependant dans une direction antihoraire au bord de l'ouverture 112, après avoir parcouru un bord de la première fente 113. L'ouverture est donc une région où l'énergie à travers le courant électrique d'image I_{A}, captée des courants périphériques de Foucault, l'énergie des courants de Foucault au bord de la cavité et celle du flux magnétique à travers la zone de la cavité, s'ajoutent toutes en phase permettant une collecte d'énergie maximale pour alimenter la puce microcontrôleur 11. Cette zone délimitée par l'ouverture 112 est donc libre de tout matériau électriquement conducteur ou magnétique, mais elle peut être remplie par n'importe quel matériau 116 diélectrique sans propriétés magnétiques.

## Revendications

1. Carte à puce métallique (1) configurée pour fonctionner sans contact en champ proche, la carte comprenant :
- un corps de carte (10) formé par un empilement de couches, l'empilement de couches comportant au moins :
- une couche métallique (110), la couche métallique étant délimitée par un bord périphérique (111) définissant un pourtour du corps de carte (10), et la couche métallique comportant une ouverture (112) formée à distance du bord périphérique ;
- une première couche d'antenne disposée d'un premier côté de la couche métallique, distincte de la couche métallique (110),
- une deuxième couche d'antenne, distincte de la première couche d'antenne et de la couche métallique (110),
- une puce (11), disposée face à l'ouverture (112) de la couche métallique,
- une première antenne (121) formée sur une surface de la première couche d'antenne (120), la première antenne étant connectée électroniquement à la puce (11), la première antenne comportant au moins un premier ensemble de spires comportant au moins une spire dite externe longeant le pourtour du corps de carte (10), et la première antenne comportant au moins un deuxième ensemble de spires comportant au moins une spire dite interne entourant la puce, le premier ensemble de spires de la première antenne étant distinct du deuxième ensemble de spires de la première antenne, et le premier ensemble de spires de la première antenne étant relié électriquement au deuxième ensemble de spires de la première antenne par au moins un tronçon de fil d'antenne,
- un composant électronique passif (12),
- une deuxième antenne (131) formée sur une surface de la deuxième couche d'antenne (130), la deuxième antenne étant connectée électroniquement au composant électronique passif (12), la deuxième antenne comportant au moins un premier ensemble de spires comportant au moins une spire dite externe longeant le pourtour du corps de carte (10), le premier ensemble de spires de la deuxième antenne étant disposé en face du premier ensemble de spires de la première antenne, et la deuxième antenne comportant au moins un deuxième ensemble de spires comportant au moins une spire dite interne entourant la puce, le deuxième ensemble de spires de la deuxième antenne étant disposé en face du deuxième ensemble de spires de la première antenne, le premier ensemble de spires de la deuxième antenne étant distinct du deuxième ensemble de spires de la deuxième antenne, et le premier ensemble de spires de la deuxième antenne étant relié électriquement au deuxième ensemble de spires de la deuxième antenne par au moins un tronçon de fil d'antenne.

2. Carte (1) selon la revendication 1, comportant au moins une couche isolante électriquement (140), la couche isolante électriquement (140) étant disposée entre la couche métallique (110) et au moins une de la première couche d'antenne (120) et la deuxième couche d'antenne (130).

3. Carte (1) selon l'une quelconque des revendications 1 ou 2, dans laquelle la couche métallique (110) est disposée entre la première couche d'antenne (120) et la deuxième couche d'antenne (130).

4. Carte (1) selon l'une quelconque des revendications 1 ou 2, dans laquelle la deuxième couche d'antenne (130) est disposée entre la première couche d'antenne (120) et la couche métallique (110).

5. Carte (1) selon l'une quelconque des revendications 1 à 4, dans laquelle le composant électronique passif (12) est en face de la puce (11).

6. Carte (1) selon l'une quelconque des revendications 1 à 4, dans laquelle le composant électronique passif (12) est décalé latéralement par rapport à l'ouverture (112).

7. Carte (1) selon l'une quelconque des revendications 1 à 6, comportant un matériau diélectrique non magnétique (116) remplissant l'ouverture (112).

8. Carte (1) selon l'une quelconque des revendications 1 à 7, dans laquelle la couche métallique (110) comporte au moins une première fente (113) s'étendant entre l'ouverture (112) et un bord périphérique (111) de la couche métallique, un bord de la première fente reliant un pourtour de l'ouverture au bord périphérique (111) de la couche métallique.

9. Carte (1) selon l'une quelconque des revendications 1 à 8, dans laquelle la couche métallique (110) comporte au moins une deuxième fente (117), la deuxième fente étant borgne s'étendant dans la couche métallique depuis l'ouverture de la couche métallique.

10. Carte (1) selon l'une quelconque des revendications 1 à 9, comportant un module encarté dans une cavité du corps de carte (10), le module comportant la puce (11).

11. Carte (1) selon l'une quelconque des revendications 1 à 10, comportant au moins une couche de revêtement supérieure (161) et une couche de revêtement inférieure (162), les deux couches d'antenne (120, 130) et la couche métallique (110) étant disposées entre la couche de revêtement supérieure (161) et la couche de revêtement inférieure (162).

12. Carte (1) selon l'une quelconque des revendications 1 à 11, dans laquelle le composant électronique passif (12) comporte une LED, une OLED, une **LED** ou OLED connectée à un pont de diodes, un composant piézoélectrique en céramique, un écran, un capteur, des cristaux liquides ou une capacité.
